**Europäisches Patentamt**

**European Patent Office**

**Office européen des brevets**

(19)

(11) Veröffentlichungsnummer: **0 123 252**
**B1**

# EUROPÄISCHE PATENTSCHRIFT

(12)

(45) Veröffentlichungstag der Patentschrift:
**07.01.87**

(21) Anmeldenummer: **84104293.0**

(22) Anmeldetag: **16.04.84**

(51) Int. Cl.⁴: **D 21 H 3/56,** B 41 M 7/02,
B 44 F 9/02, B 32 B 29/04

(54) **Verfahren zur Herstellung von farbigen melaminharzhaltigen Dekorpapierfolien mit einer dreidimensionalen Oberflächenstruktur.**

(30) Priorität: **22.04.83 DE 3314610**

(43) Veröffentlichungstag der Anmeldung:
**31.10.84 Patentblatt 84/44**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**EP - A - 0 043 062**
**DE - A - 2 224 732**
**DE - A - 3 024 393**
**DE - A - 3 247 677**
**US - A - 3 811 915**
**US - A - 3 983 307**

(73) Patentinhaber: **Letron GmbH, Dorfstrasse 2,**
**D-8750 Aschaffenburg (DE)**

(72) Erfinder: **Diesel, Hans-Dieter, Dr. Dipl.-Chem.,**
**Ellenseestrasse 37-39, D-6453 Seligenstadt (DE)**
Erfinder: **Schmidt, Hans Joachim, Hirtenbornstrasse 18,**
**D-8751 Haibach (DE)**
Erfinder: **Sauer, Burkhard, Hollerweg 5, D-8751 Sulzbach**
**(DE)**

(74) Vertreter: **Türk, Dietmar, Dr. rer. nat. et al, Türk, Gille +**
**Hrabal Patentanwälte Bruckner Strasse 20,**
**D-4000 Düsseldorf 13 (DE)**

## Beschreibung

Die Erfindung betrifft ein Verfahren zur Herstellung von farbigen melaminharzhaltigen Dekorpapierfolien mit einer dreidimensionalen Oberflächenstruktur durch Bedrucken der Papierfolien mit einem Muster und Überlackieren, wobei eine wässrige Druckfarbe verwendet wird und die Druckfarbe, die an den Bereichen aufgedruckt wird, an denen die Lackschicht dünner als an den anderen Bereichen ist, ein lackabstossendes Mittel enthält.

In der US-A-3 811 915 ist ein Verfahren zur Herstellung von farbigen Dekorpapierfolien mit einer dreidimensionalen Oberflächenstruktur durch Bedrucken der Papierfolien mit einem Muster und Überlackieren beschrieben, wobei die Druckfarbe, die an den Bereichen aufgedruckt wird, an denen die Lackschicht dünner als an den anderen Bereichen ist, ein lackabstossendes Mittel enthält. In der DE-A-3 247 677 ist ein verbessertes derartiges Verfahren beschrieben, gemäss dem eine wässrige Druckfarbe verwendet wird, die bedruckte Folie getrocknet wird, die bedruckte Folie mit einem wässrigen Lack mit einer Viskosität von 15 bis 40 sec im AK4-Becher enthaltend als Bindemittel im wesentlichen eine Mischung von A) einem Gemisch aus einem in Wasser gelösten Harnstoff- und/oder Melaminharz und einer wässrigen Säure als Härter, das nach Vermischen der wässrigen Harzlösung mit der Säure bei 100°C in weniger als 100 sec härtet, B) einem Bindemittel ausgewählt aus der Gruppe a) wasserverdünnbares Polyesterharz, b) Acrylatharz und c) äthoxyliertes Glyzerinderivat, wobei auf 100 Gewichtsteile Festkörper Bindemittel A) 10 bis 250 Gewichtsteile Festkörper Bindemittel B) entfallen, lackiert wird, und die lakierte Folie durch Einwirkung von auf mehr als 100°C erwärmter Luft ohne Einwirkung von Druck gehärtet wird. Mit diesem Verfahren können Folien hergestellt werden, deren Oberfläche von einer Naturholzoberfläche nur schwer zu unterscheiden ist. Die Porenbildung ist jedoch häufig noch nicht voll zufriedenstellend, weil beim Verpressen mit dem Untergrund das Melaminharz, das sich auf der Oberfläche der Papierfolie befindet, fliesst und zum Teil die Stellen überdeckt, die lackabstossendes Mittel enthalten, so dass die Porenbildung nicht genügend stark ist.

Der vorliegenden Erfindung liegt die Aufgabenstellung zugrunde diese Nachteile zu vermeiden und ein Verfahren zur Herstellung der eingangs beschriebenen Folien zu finden, bei dem eine deutlich sichtbare Porenbildung erfolgt, und welche Folien beim Verpressen mit Substraten unter den Bedingungen des Melamin-Kurztakt-Verfahrens einen vorzüglichen Verbund ergeben.

Die Erfindung betrifft deshalb das in den Ansprüchen beschriebene Verfahren und die Verwendung des danach hergestellten Produkts.

Die Papierfolien werden, wie gemäss dem Stand der Technik, mit einem Muster bedruckt. Wenn nur ein zweifarbiges Muster gewünscht wird, genügt es, wenn die eine gewünschte Farbe aufweisende Papierfolie mit einem Muster mit einer anderen Farbe bedruckt wird. Es können aber auch mehrfarbige Dekorpapierfolien dadurch hergestellt werden, dass die Papierfolien mit mehreren Farben nacheinander zur Erzielung des gewünschten Musters bedruckt werden. In jedem Fall muss die letzte Druckfarbe an den Bereichen aufgedruckt werden, an denen die Lackschicht der fertigen Folie dünner ist als an den anderen Bereichen. Damit dies erzielt wird, muss diese zuletzt aufgedruckte Druckfarbe ein lackabstossendes Mittel enthalten. Lackabstossende Mittel können, wie in den oben genannten Literaturstellen beschrieben, Polysiloxane auf der Basis von Silikonharzen und -ölen sein. Spezielle Beispiele sind niedere Alkylsilikone wie Dimethyl- und Diethylsilikon. Beispiele für derartige Handelsprodukte sind Dri-Film 1040 der Firma General Electric und Silikonefluid 1107 der Firma Dow Corning (eingetragenes Warenzeichen). Es können auch niedere Alkylsilikone, welche einen gewissen Anteil Phenylgruppen enthalten, oder Esterwachse (Wachse auf Basis Rohmontanwachs) verwendet werden.

Durch den Gehalt der zuletzt aufgedruckten Druckfarbe an derartigen lackabstossenden Mitteln wird erreicht, dass dann, wenn man in der beschriebenen geeigneten Weise lackiert, an den mit dieser Druckfarbe bedruckten Stellen der Lack abgestossen wird und deshalb dünner ausgebildet ist, als in den anderen Bereichen. Man erzielt so auf einer eine glatte Oberfläche aufweisenden Dekorpapierfolie eine deutlich dreidimensionale Oberflächenstruktur, wie sie eine Holzoberfläche (Furnier) aufweist. Die Dekorpapierfolien gemäss der Erfindung sind, wenn sie mit einem Holzmuster bedruckt wurden, von einem künstlichen Holzfurnier praktisch nicht zu unterscheiden. Ein wesentliches Merkmal des Verfahrens der Erfindung besteht darin, dass die Papierfolie mit einer wässrigen Tiefdruckfarbe auf Proteinbasis bedruckt wird. Unter dem Begriff «wässrig» wird verstanden, dass die flüssige Phase im wesentlichen aus Wasser besteht. Als Lösungsvermittler können bis zu etwa 30 Volum-%, vorzugsweise bis zu 20 Vol.-%, besonders bevorzugt bis zu 10 Vol.-%, bezogen auf die Gesamtmenge der flüssigen Phase, aliphatische einwertige oder mehrwertige Alkohole in der Druckfarbe enthalten sein. Beispiele hierfür sind Methanol, Ethanol, Ethylglykol, Propylalkohole, Glyzerin usw. Bevorzugt sind Ethanol und Ethylglykol oder ein Gemisch davon, wobei in dem Gemisch aus Ethanol und Ethylglykol der Anteil an Ethylglykol zweckmässig etwa 10 bis 40 Volum-%, vorzugsweise etwa 15 bis 30 Volum-% beträgt.

Die Druckfarbe enthält ein organisches Bindemittel. Ein bevorzugtes Bindemittel ist Casein. Ausserdem enthält die Druckfarbe naturgemäss die gewünschten farbgebenden Pigmente sowie gegebenenfalls vorgenannte lacktechnische Zusatzmittel wie Silikonharze bzw. -öle und spezielle Wachse.

Ein weiteres wesentliches Merkmal des Verfahrens der Erfindung besteht darin, dass die bedruckte Dekorpapierfolie getrocknet wird. Sie kann so längere Zeit, d.h. Wochen, Monate oder sogar Jahre gelagert werden. Die Weiterverarbeitung kann dann an einem beliebigen Ort bzw. zu einem beliebigen Zeitpunkt auf einer hierfür geeigneten Anlage erfolgen.

Die bedruckte und getrocknete Papierfolie wird dann unmittelbar anschliessend, oder, wie oben erwähnt, nach beliebiger Zeit, gegebenenfalls in einer anderen Betriebsstätte, mit einer wässrigen Imprägnierlösung eines Melaminharzes mit einer Viskosität von 15 bis 30 sec im AK4-Becher von der unbedruckten Seite her, z.B. mittels einer Einreibwalze unter Ausbildung eines einseitigen Harzüberstandes auf der unbedruckten Seite imprägniert und durch Einwirkung von Objekttemperaturen von mehr als 100°C bis zu einem Trockenwert von 4.0 bis 9.0 getrocknet.

Bevorzugt wird bis zu einem Trockenwert von mindestens 4,5 getrocknet. Die obere Grenze des Trockenwertes liegt bevorzugt bei 8.0. Der Trockenwert wird wie folgt bestimmt:

Aus der getrockneten, imprägnierten Folie wird ein 10 cm × 10 cm = 100 cm² grosses Probestück geschnitten und auf einer Analysenwaage mit einer Genauigkeit von ± 1 mg eingewogen. (Die Wägung soll möglichst kurzfristig nach der Probenahme erfolgen, da es sich bei dem Produkt um eine hygroskopisches Vorkondensat handelt, dass im Verlauf der Zeit Wasser aufnimmt.) Das Probestück wird nach der Wägung 5 Minuten lang im Trockenschrank bei 160°C getrocknet, im Exsikkator abgekühlt und zurückgewogen. Die Differenz von Einwaage und Rückwaage multipliziert mit 100 geteilt durch die Rückwaage ergibt den Trockenwert in Prozent.

Das Trocknen kann z.B. in einem Schwebetrockner bei Umlufttemperaturen von maximal 200°C erfolgen. Bevorzugt sollte die obere Temperaturgrenze bei 160°C liegen. Zweckmässig ist eine Temperaturkurve im Schwebetrockner ansteigend von 120 bis 160°C. Die Trocknung kann aber auch mit Infrarot-Strahlern erfolgen. Wenn das Papier bis zu dem genannten Trockenwert getrocknet wird, kann es aufgewickelt werden, ohne zusammenzukleben. Es ist aber noch nicht voll ausgehärtet.

Die Menge des aufgebrachten Melaminharzes kann durch geeignete maschinelle Vorrichtungen gesteuert werden, z.B. eine Rakel. Bevorzugt wird eine Harzmenge von 60 bis 100 Gew.-Teilen Harz (Festkörper) auf 100 Gew.-Teile Papier aufgebracht. Besonders bevorzugt werden mindestens 70 Gew.-Teile Harz aufgebracht. Die obere Grenze liegt zweckmässig bei 90 Gew.-Teilen.

Die Imprägnierung mit dem Melaminharz kann mit einer Geschwindigkeit von 10 m/min bis 50 m/min erfolgen.

Als Melaminharz können im Handel erhältliche, gegebenenfalls modifizierte, Melamin-Formaldehyd-Tränkharze verwendet werden, wie sie z.B. unter den eingetragenen Warenzeichen Madurit MW 559 oder Madurit MW 484 erhältlich sind. Die Tränkharzlöungen haben einen Festkörpergehalt von etwa 50 bis 60 Gew.-%, vorzugsweise von etwa 55 bis 60 Gew.-% (gemessen durch einstündiges Erhitzen im Trockenschrank auf 120°C im Glasschälchen nach DIN 12605). Durch Zugabe von üblichen Härtern für Melamin-Tränkharze kann die Härtungszeit verkürzt werden, insbesondere bei grosstechnischer Herstellung. Topfzeiten von 8 bis 24 Stunden bei Raumtemperatur sind annehmbar. Die Temperatur der Tränklösung sollte nicht über 35°C, vorzugsweise nicht über 30°C liegen. Höhere Temperaturen können die Topfzeiten erheblich abkürzen und damit die Beständigkeit der Imprägnierlösung stören.

Gemäss der Erfindung kann aber das Melaminharz für die Imprägnierung auch ohne Härter eingesetzt werden, so dass es eine lange Reaktionsfähigkeit in der imprägnierten Papierfolie behält. Überraschenderweise tritt dennoch eine vollständige und zufriedenstellende Aushärtung beim Verpressen durch den Direktbeschichter ein. Anscheinend wird die Aushärtung des Harzes mitkatalysiert durch den im Decklack enthaltenen Härter, der durch die Papierfolie zu dem auf die Unterseite der Folie aufgetragenen Imprägnierharz gelangt, das ebenfalls in die Papierfolie eindringt. Möglicherweise aufgrund dieses Sachverhaltes wird auch ein besonders guter Verbund zwischen dem Decklack und dem auf die Rückseite aufgebrachten Imprägnierharz erzielt. Ein Spalten des Papiers tritt nicht ein.

Die so imprägnierte und getrocknete Folie kann bei Lagerbedingungen von 50 bis 70% Luftfeuchte und 20 bis 25°C ebenfalls längere Zeit, problemlos bis zu 6 Monten, gelagert werden, ehe sie weiter verarbeitet wird. Dies ist ein besonderer Vorteil, weil es möglich ist, bis zu diesem Stadium bearbeitete Folien in unterschiedlicher Weise zu gewünschten Zeitpunkten weiter zu verarbeiten. Mann kann aber auch unmittelbar anschliessend den nächsten Verfahrensschritt durchführen.

Danach wird die bedruckte und imprägnierte Folie auf der bedruckten Seite mit einem wässrigen Lack mit einer Viskosität von 15 bis 40 sec im AK4-Becher enthaltend als Bindemittel im wesentlichen eine Mischung von A) einem Gemisch aus einem in Wasser gelösten Melaminharz und einer wässrigen Säure als Härter, das nach Vermischen der wässrigen Harzlösung mit der Säure bei über 100°C in weniger als 100 sec härtet, B) einem Bindemittel ausgewählt aus der Gruppe a) wasserverdünnbares Polyesterharz, b) Acrylatharz und c) äthoxyliertes Glyzerinderivat, wobei auf 100 Gew.-Teile Festkörper Bindemittel A) 10 bis 250 Gew.-Teile Festkörper Bindemittel B) entfallen, lackiert.

Die Lackierung kann mit einer Geschwindigkeit von 10 m/min bis 50 m/min erfolgen. Da die Lackiergeschwindigkeit gleich der Imprägniergeschwindigkeit sein kann, ist es möglich, beide Verfahrensschritte nach Zwischentrocknung unmittelbar nacheinander in einer Anlage durchzuführen.

Zum Lackieren wird ein wässriger Lack gemäss der obigen Definition verwendet. Das wesentliche Merkmal des Verfahrens der Erfindung in dieser Beziehung besteht in der Verwendung eines wässrigen Lackes. Auch hier kann, wie bereits in Zusammenhang mit der Druckfarbe beschrieben, der wässrige Lack geringe Mengen, vorzugsweise bis zu 20 Volum-%, besonders bevorzugt bis zu 10 Volum-% organische Lösungsmittel als Lösungsvermittler enthalten. Geeignete organische Lösungsmittel für den Lack sind Ethanol, Glykole, Methoxybutanol.

Es ist wichtig, dass der wässrige Lack eine Verarbeitungsviskosität im Bereich von 15 bis 40 sec im AK4-Becher aufweist, vorzugsweise 22 bis 30 sec. Die Bestimmung der Viskosität im AK4-Becher erfolgt bei 20°C nach DIN 53211.

Eine wesentliche Bindemittelkomponente ist das unter A) definierte Melaminharz. Es handelt sich hier um im Handel erhältliche wässrige Lösungen solcher Harze. Beispiele für derartige Handelsprodukte sind

1)  Maprenal MF 900 = nichtplastifiziertes Hexa-methoxymethylmelaminharz (Hoechst AG) (ein-getragenes Warenzeichen)
2)  Maprenal MF 920 = hochreaktives, nichtplastifi-ziertes Melaminharz (Hoechst AG) (eingetrage-nes Warenzeichen)
3)  Methanoleverätherte Melaminharze der Luwipal-Reihe (BASF) (eingetragenes Warenzeichen).

Derartige Melaminharze können in bekannter Weise mit einer wässrigen Säure gehärtet werden, wie dies dem Fachmann bekannt ist. Es können organische und anorganische Säuren eingesetzt werden. Beispiele für organische Säuren sind p-Toluolsulfonsäure bzw. geblockte p-Toluolsulfonsäure. Beispiel für geeignete anorganische Säuren ist Phosphorsäure.

Wichtig ist, dass das Gemisch aus in Wasser gelöstem Melaminharz und der Härtersäure eine lange Topfzeit bei Raumtemperatur (ca. 4 bis 8 Stunden) und eine kurze Topfzeit bei erhöhter Temperatur aufweist. Das katalysierte Lackgemisch muss also bei Temperaturen über 100°C in weniger als 100 Sekunden, zweckmässig in weniger als 80 Sekunden und vorzugsweise in weniger als etwa 60 Sekunden härten.

Um einen guten dreidimensionalen Effekt zu erzielen, ist es erforderlich, dass der Lack als Bindemittel die oben beschriebene Komponente B) in der oben angegebenen Menge enthält. Bevorzugt werden auf 100 Gew.-Teile Festkörperbindemittel A) mindestens etwa 10 Gew.-Teile, vorzugsweise mindestens etwa 20 Gew.-Teile Bindemittel B) eingesetzt. Andererseits liegt die obere Grenze für den Anteil an Bindemittel B) zweckmässig bei 250 Gew.-Teilen, bevorzugt bei 150 Gew.-Teilen.

Beispiele für die unter B) definierten Bindemittel sind die folgenden Handelsprodukte (eingetragene Warenzeichen)

a)  wasserverdünnbares Polyesterharz
Worléepol V 808 — wasserverdünnbares, nied-rigviskoses hochreaktives Polyesterharz (Wor-lée-Chemie GmbH)
b)  Acrylatharz
Acronal 240 D - wässrige, weichmacherfreie Di-spersion eines thermisch vernetzbaren Copoly-merisates auf Basis eines Acrylsäureester und Styrol (BASF).
c)  äthoxyliertes Glyzerinderivat
Weichmachungsmittel 9 = Oxäthylierungsprodukt des Glyzerins (BASF).

Der Lack enthält ausser den Bindemitteln geeignete lacktechnische Zusatzstoffe wie Weichmacher, Mattierungsmittel, Entschäumer, das Absetzen verhindernde Mittel, wie dies dem Fachmass bekannt ist.

Der Lack enthält an Bindemittel etwa 40 bis 60 Gew.-% Festkörper. Er wird zweckmässig in einer Menge von 10 bis 50 g Lacklösung pro m² Dekorpapierfolien vorzugsweise 20 bis 30 g/qm aufgetragen.

Unmittelbar nach dem Lackieren wird die Folie durch Einwirkung von Objekttemperaturen von mehr als 100°C gehärtet. Die obere Temperaturgrenze für die erwärmte Luft wird bestimmt durch die Verhinde-rung von auf lacktechnischem Gebiet üblichen uner-wünschten Eigenschaften wie Blasenbildung, Lack-verlauf.

Zweckmässig wird in einem Schwebetrockner getrocknet, wobei die Temperatur der erwärmten Luft ansteigt bis auf etwa 160°C.

Es ist aber auch möglich, zur Trocknung Infrarot-Strahler einzusetzen. Die Trocknung wird bis zu einem Trockenwert von 3.5 bis 6.5, vorzugsweise von 5.5 geführt.

Bei schwierigen Dekoren kann die lackierte Folie unmittelbar nach dem Lackauftrag vor dem Erwärmen auf über 100°C mit der unbedruckten Seite über eine geheizte Walze mit einer Walzenoberflächentemperatur von 60 bis 100°C geführt werden. Zweckmässig beträgt die Walzenoberflächentemperatur mindestens etwa 80°C. Durch diese Verfahrensvariante wird die Ausbildung der Poren unterstützt.

Die gemäss der Erfindung hergestellte Folie kann bei Lagerbedingungen von 50 bis 70% Luftfeuchte und 20 bis 25°C lange Zeit, problemlos bis zu 6 Monaten gelagert und in dieser Form an Direktbeschichter, d.h. Hersteller von beschichteten Spanplatten und dergleichen geliefert werden. Diese Direktbeschichter können bei der letzten Verdichtung der Spanplatten unter Druck und Temperatureinwirkung die gemäss der Erfindung hergestellte Folie mit der Spanplatte verpressen. Zweckmässig werden während eines Zeitraumes von 1 bis 2 Minuten Druck von 12470 kPa (15) bis 1960 kPa (20 kp/cm²) und Temperaturen von 140 bis 160°C, gemessen am Dekorpapier, angewandt, wie dies auf dem Gebiet der Spanplatten beim Mehretagen-Kurztakt-Verfahren bekannt ist. Unter diesen Temperaturen härtet sowohl die Platte als auch die gemäss der Erfindung hergestellte Folie aus und wird gleichzeitig mittels des rückseitig aufgebrachten Melaminharzes mit der Spanplatte oder dem sonstigen Substrat fest verbunden. Zweckmässig wird ohne Rückkühlung gearbeitet.

Es ist überraschend, dass es bei der Herstellung der Folie gemäss der Erfindung zu einer Verbindung zwischen dem auf die Rückseite des Papiers aufgebrachten und in das Papier eingedrungenen Melaminharz und der Lackschicht, die auf die Oberseite aufgetragen wird, kommt, ohne dass die Lackschicht durch bei der Kondensationsreaktion des Melaminharzes entstehendes Wasser bzw. andere Dämpfe (abgespaltenes Formaldehyd) beeinträchtigt wird. Darüber hinaus war es überraschend, dass der Decklack an den Stellen der Druckfarbe zurückweicht und beim nachfolgenden Verpressen beim Direktbeschichter zwar flüssig genug wird, um sich mit dem Melaminharz im Innern des Papiers zu verbinden, aber andererseits nicht so weit verflüssigt wird, dass er die Druckfarbe überfliesst, wie dies bei dem eingangs beschriebenen Verfahren manchmal der Fall ist.

Ein besonderer Vorteil des Verfahrens der Erfindung liegt darin, dass aus sehr dünnen Papierfolien Dekorpapierfolien mit ausgezeichneten mechanischen und chemischen Eigenschaften erhalten werden können. Gemäss der Erfindung können Papierfolien mit einem Quadratmetergewicht von 30 bis 250 Gramm eingesetzt werden. Es können sogenannte Laminatpapiere eingesetzt werden, die noch keine Imprägnierung mit irgendwelchen Kunstharzen aufweisen.

Es können auch einseitig glatte Laminatpapiere eingesetzt werden, die auf der glatten Seite bedruckt werden. Auf der glatten Seite tritt die dreidimensionale Oberflächenstruktur besonders stark in Erscheinung. Die rauhere Seite ermöglicht andererseits eine bessere Verbindung mit dem Untergrund, auf den die Dekorpapierfolien appliziert werden.

In den nachfolgenden Beispielen wird die Erfindung erläutert. Bei den angegebenen Mengen handelt es sich um Gewichtsteile, sofern nichts anderes angegeben ist.

Beispiele für Druckfarben:

| Druckfarbe I | Gew.-Teile |
|---|---|
| Heliogenblau 7081-D (BASF) | 12.9 |
| Neocryl BR-24 (Polyvinyl Chemie) | 19.2 |
| Neocryl AP-2860 (Polyvinyl Chemie) | 0.2 |
| DMAMP (I.M.C.) | 1.6 |
| Wasser | 18.2 |
| Neocryl BT-22 (Polyvinyl Chemie) | 40.0 |
| Aquacer 502 (Cera Chemie) | 4.9 |

Druckfarbe II
wässrige Druckfarbe analog Druckfarbe I, jedoch Farbstellung hellbraun

| Druckfarbe III | Gew.-Teile |
|---|---|
| wässrige Druckfarbe analog Druckfarbe I, jedoch Farbstellung dunkelbraun | 97 |
| Wachs KSE-Lösung (Hoechst AG) | 3 |

Beispiele für Melamin-Imprägnierlösungen:

| Melamin-Imprägnierlösung I | Gew.-Teile |
|---|---|
| Madurit MW 559 | 54.74 |
| Wasser | 44.88 |
| Madurit-Härter MH 835 | 0.11 |
| Hypersal XT 790 (Netzmittel) | 0.27 |

| Melamin-Imprägnierlösung II | Gew.-Teile |
|---|---|
| Madurit MW 484 (58%ige wässrige Lösung) | 120.0 |
| Madurit-Härter MH 835 | 0.1 |
| Hypersal 793 (Netzmittel) | 0.3 |

| Melamin-Imprägnierlösung III | Gew.-Teile |
|---|---|
| Madurit MW 484 (58%ige wässrige Lösung) | 120.0 |
| Hypersal XT 793 (Netzmittel) | 0.3 |

Beispiele für Lacklösungen:

| Lack I, seidenglänzend | Gew.-Teile |
|---|---|
| Maprenal MF 920/95% (Hoechst AG) (Melaminharz) | 62.1 |
| p-Toluolsulfonsäure / 50% in Wasser | 5.0 |
| Acronal 240 D / 40% (BASF) (Arcylatharz) | 15.0 |
| 1.6-Hexandiol / 80% (BASF) | 12.0 |
| Syloid 166 (Grace) (Mattierungsmittel auf Basis Kieselsäure) | 2.5 |
| Paste Bentone EW / 5% (Kronos Titan) | 1.25 |
| Methoxybutanol (Hoechst AG) | 3.0 |
| Surfynol TG (Air Products USA) (Pigmentbenetzungsmittel) | 0.5 |
| Lösung Etingal A / 10% (BASF) (Antischaummittel auf Basis Phosphorsäureester) | 0.75 |

| Lack II, seidenmatt | Gew.-Teile |
|---|---|
| Maprenal MF 900 / 95% (Hoechst AG) | 32.0 |
| p-Toluolsulfonsäure / 50% in Wasser | 5.0 |
| Weichmachungsmittel 9 (BASF) | 26.0 |
| Paste Bentone EW / 5% (Kronos Titan) | 2.0 |
| Syloid 166 (Grace) (Mattierungsmittel auf Basis Kieselsäure) | 4.0 |
| Wasser | 14.0 |
| Ethanol | 6.0 |
| Lösung Etingal / 10% (BASF) (Antischaummittel auf Basis Phosphorsäureester) | 2.0 |
| Worléepol V 808 | 14.0 |

Beispiel 1

Ein im Handel erhältliches Papier mit einem Gewicht von 60 g/m$^2$ wird unter Verwendung der Druckfarbe II im ersten Farbwerk mit einem Holzmaserungsmuster im direkten Tiefdruck bedruckt und getrocknet. Die so bedruckte Folie wird im zweiten Farbwerk mit der Druckfarbe III bedruckt, die ein lackabstossendes Mittel enthält. Der Druck mit dieser Druckfarbe erfolgt lediglich an den Stellen, an denen eine Porenbildung erzeugt werden soll. Diese Druckfarbe ist dunkler eingefärbt als die Druckfarbe II. Die Druckfarbe III hat also grundsätzlich die gleiche Zusammensetzung wie die Druckfarbe II, lediglich mit den vorstehend beschriebenen Abänderungen.

Die so bedruckte Papierfolie wird unmittelbar oder nach mehreren Monaten, z.B. 2 Monaten, mit der Melaminharz-Imprägnierlösung I von der Rückseite her beharzt, wobei ein Harzauftrag von 80 g Festharz auf 100 g Papier unter Anwendung einer Rakel eingestellt wird. Die beschichtete Folie wird in einem Hängetrockner getrocknet, wobei die Umlufttemperatur am Eingang etwa 100°C und am Ausgang etwa 140°C beträgt. Die Verweilzeit im Hängetrockner beträgt etwa 60 sec. Es wird dabei ein Trockenwert von etwa 5.5 erzielt. Die Imprägnierung erfolgte mit einer Geschwindigkeit von 30 m/min.

Die so bedruckte Papierfolie wird nach 2 Monaten mit der Lacklösung I auf der bedruckten Oberfläche mit einer Auftragsmenge von 12 g/m$^2$ auf einer üblichen Papierlackiermaschine lackiert, wobei durch eine Rundrakel die Auftragsmenge eingestellt wird. Die lackierte Folie wird durch einen Trockenkanal geleitet, in dem die Lufttemperatur von 100°C am Eingang bis 150°C am Ausgang des Trockenkanals ansteigt. Die Verweilzeit im Trockenkanal beträgt etwa 40 Sekunden.

*Beispiel 2*

Es wird zum Bedrucken ein Papier mit einem Gewicht von 90 g/m² verwendet, das im Handel unter der Bezeichnung Dekorpapier satiniert der Firma PWA Dekor GmbH & Co. erhältlich ist. Dieses Papier wird wie in Beispiel 1 beschrieben bedruckt. Das bedruckte Papier wird mit der Melaminharz-Imprägnierlösung III, wie in Beispiel 1 beschrieben, imprägniert und getrocknet. Es wird eine Melaminharzmenge von 90 g Festharz pro 100 g Papier aufgebracht.

Die Lackierung dieser Folie erfolgt wie in Beispiel 1 beschrieben, wobei Lacklösung I oder Lacklösung II eingesetzt werden können.

*Beispiel 3*

Es wird ein Laminatpapier mit einem Gewicht von 130 g/m² verwendet, wie es von der Firma Holtzmann & Cie. AG erhältlich ist. Dieses Papier wird als 4-Farbendruck ausgerüstet. Die ersten drei Druckfarben haben die Zusammensetzung wie Druckfarbe I, weisen jedoch unterschiedliche Farbstellungen auf und enthalten nicht die zuletzt angegebene Komponente Wachs KSE-Lösung. Als letzte Druckfarbe wird im vierten Druckwerk, also nach der Trocknung der Farben 1 bis 3, die mit Esterwachs modifizierte Druckfarbe III aufgebracht und getrocknet.

Das bedruckte Papier wird nach 2 Monaten wie in Beispiel 1 oder 2 beschrieben mit der Melaminharz-Imprägnierlösung II von der Rückseite her beharzt, wobei eine Auftragsmenge von 70 g Festharz pro 100 g Papier erhalten wird.

Die Lackierung erfolgt mit dem Lack II (seidenmatt).

Die Lackauftragsmenge beträgt 15 g Bindemittel des Lackes pro m² der Papierfolie. Die mit dem Lackauftrag versehene Folie wird unmittelbar anschliessend über eine Heizwalze geführt, die eine Oberflächentemperatur von 90°C aufweist. Anschliessend wird die Folie durch einen Trockenkanal mit ansteigendem Temperaturprofil von 80 bis 170°C geführt, wobei die Verweilzeit 40 Sekunden beträgt.

**Patentansprüche**

1. Verfahren zur Herstellung von farbigen melaminharzhaltigen Dekorpapierfolien mit einer dreidimensionalen Oberflächenstruktur durch Bedrucken der Papierfolien mit einem Muster, Imprägnieren und Überlackieren, wobei eine wässrige Druckfarbe verwendet wird und die Druckfarbe, die an den Bereichen aufgedruckt wird, an denen die Lackschicht dünner als an den anderen Bereichen ist, ein lackabstossendes Mittel enthält, dadurch gekennzeichnet, dass

1. die bedruckte und getrocknete Papierfolie mit einer wässrigen Imprägnierlösung eines Melaminharzes mit einer Viskosität von 15 bis 30 sec im AK4-Becher von der unbedruckten Seite her unter Ausbildung eines einseitigen Harzüberstandes auf der unbedruckten Seite imprägniert und durch Einwirkung von Objekttemperaturen von mehr als 100°C bis zu einem Trockenwert von 4.0 bis 9.0 getrocknet wird,

2. die bedruckte, imprägnierte und getrocknete Folie auf der bedruckten Seite mit einem wässrigen Lack mit einer Viskosität von 15 bis 40 sec im AK4-Becher enthaltend als Bindemittel im wesentlichen eine Mischung von

A) einem Gemisch aus einem in Wasser gelösten Melaminharz und einer wässrigen Säure als Härter, das nach Vermischen der wässrigen Harzlösung mit der Säure bei über 100°C in weniger als 100 sec härtet,

B) einem Bindemittel ausgewählt aus der Gruppe

   a) wasserverdünntes Polyesterharz

   b) Acrylatharz

   c) äthoxyliertes Glyzerinderivat

wobei auf 100 Gew.-Teile Festkörper Bindemittel A) 10 bis 25 Gew.-Teile Festkörper Bindemittel B) entfallen,

lackiert wird, und

3. die lackierte Folie durch Einwirkung von Objekttemperaturen von mehr als 100°C gehärtet wird.

2. Verfahren nach Anspruch 1, dadurch gekennzeichnet, dass in Stufe 1 eine Harzmenge von 60 bis 100 Gewichtsteilen Harz auf 100 Gewichtsteile Papier aufgebracht wird.

3. Verfahren nach einem der Ansprüche 1 oder 2, dadurch gekennzeichnet, dass die Folie unmittelbar nach dem Lackauftrag vor dem Härten mit der unbedruckten Seite über eine geheizte Walze mit einer Walzenoberflächentemperatur von 60 bis 100°C geführt wird.

4. Verwendung nach einem Verfahren gemäss einem der Ansprüche 1 bis 3 hergestellten Folie zur Beschichtung von Spanplatten.

5. Verwendung nach Anspruch 4 unter Anwendung des Mehretagen-Kurztakt-Verfahrens.

**Claims**

1. A process for the production of coloured decorative paper shets containing melamine resin and having a three-dimensional surface structure by printing the paper sheets with a pattern, impregnating and over-lacquering, an aqueous printing ink being used and the printing ink which is to be applied to the regions in which the layer of lacquer is to be thinner than in the other regions containing a lacquer-repelling agent, characterised in that

1. the printed and dried paper sheet is impregnated with an aqueous impregnating solution of a melamine resin having a viscosity of from 15 to 30 sec. in an AK4 beaker from the unprinted side to form a one-sided resin overlay on the unprinted side and is dried to a dryness value of 4.0 to 9.0 by the effect of object temperatures higher than 100°C,

2. the printed, impregnated and dried sheet is lacquered on the printed side with an aqueous lacquer having a viscosity of from 15 to 40 sec. in an AK4 beaker containing as binder substantially a mixture of

A) a mixture of a melamine resin dissolved in water and an aqueous acid as hardener which sets at above 100°C in less than 100 sec. after mixing the aqueous resin solution with the acid,

B) a binder selected from the group

    a) water-dilutable polyester resin

    b) acrylate resin

    c) ethoxylated glycerine derivative

wherein from 10 to 250 parts by weight of binder B) solids are used per 100 parts by weight of binder A) solids and

3. the lacquered sheet is hardened by the effect of object temperatures higher than 100°C.

2. A process according to claim 1, characterised in that a resin quantity of from 60 to 100 parts by weight of resin to 100 parts by weight of paper is applied in stage 1.

3. A process according to one of claims 1 or 2, characterised in that the sheet is guided immediately after the application of lacquer and prior to hardening with the unprinted side over a heated roller having a roller surface temperature of from 60 to 100°C.

4. Use of a sheet produced by a process according to one of claims 1 to 3 for the coating of chipboards.

5. Use according to claim 4 while adopting the multiple layer short time process.

**Revendications**

1. Procédé de fabrication de feuilles de papier décor coloré, contenant une résine de mélamine, ayant une structure superficielle tridimensionnelle, par impression des feuilles de papier avec un modèle, imprégnation et application d'un vernis de surimpression, dans lequel une encre d'imprimerie aqueuse est utilisée, et l'encre d'imprimerie, qui est appliquée dans les régions sur lesquelles la couche de vernis est plus mince que dans les autres régions, contient un agent repoussant le vernis, caractérisé par le fait que
1. la feuille de papier imprimée et séchée est imprégnée sur le côté non imprimé d'une solution d'imprégnation aqueuse d'une résine de mélamine ayant une viscosité de 15 à 50 secondes dans la coupe AK4 à partir du côté non imprimé avec formation d'une surélévation de résine d'un seul côté, et est séchée par action de température d'objet de plus de 100°C jusqu'à une valeur sèche de 4,0 à 9,0,

2. la feuille imprimée, imprégnée et séchée est vernie sur le côté imprimé avec un vernis aqueux ayant une viscosité de 15 à 40 secondes dans une coupe AK4 contenant comme liant essentiellement un mélange de

A) un mélange d'une résine de mélamine dissoute dans l'eau et d'un acide aqueux comme durcisseur, qui durcit après mélange de la solution aqueuse de résine avec l'acide à plus de 100°C en moins de 100 secondes,

B) un liant choisi dans le groupe

    a) d'une résine polyester pouvant être diluée à l'eau

    b) d'une résine d'acrylate

    c) d'un dérivé éthoxylé du glycérol

dans les proportions de 100 parties en poids de substances solides du liant A) pour 10 à 250 parties en poids de substances du liant B) et

3. la feuille laquée est durcie par action de température d'objet de plus de 100°C.

2. Procédé selon la revendication 1, caractérisé par le fait qu'on applique dans le stade 1 une quantité de 60 à 100 parties en poids de résine pour 100 parties en poids de papier.

3. Procédé selon l'une des revendications 1 ou 2, caractérisé par le fait que la feuille est envoyée aussitôt après l'application de vernis, avant le durcissement avec le côté imprimé sur un cylindre chauffé ayant une température superficielle du cylindre de 60 à 100°C.

4. Utilisation d'une feuille fabriquée suivant un procédé conforme à l'une des revendications 1 à 3 pour l'enduction de panneaux de particules.

5. Utilisation selon la revendication 4, en utilisant le procédé à cycle court à plusieurs étages.